Europäisches Patentamt

(19) European Patent Office

Office européen des brevets

(11) Veröffentlichungsnummer: **0 020 552 B1**

(12) **EUROPÄISCHE PATENTSCHRIFT**

(51) Int. Cl.³: **G 06 F 15/24**

(45) Veröffentlichungstag der Patentschrift:
06.10.82

(21) Anmeldenummer: **79901451.9**

(22) Anmeldetag: **19.09.79**

(86) Internationale Anmeldenummer:
**PCT/DE 79/00115**

(87) Internationale Veröffentlichungsnummer:
**WO 80/01009 (15.05.80** Gazette 80/11)

(54) **ELEKTRONISCHE VORRICHTUNG ZUR VERWALTUNG VON INSBESONDERE IM HAUSHALT EINGELAGERTEN VERDERBLICHEN GÜTERN.**

(30) Priorität: **13.11.78 DE 2849156**

(43) Veröffentlichungstag der Anmeldung:
**07.01.81 Patentblatt 81/1**

(45) Bekanntmachung des Hinweises auf die Patenterteilung:
**06.10.82 Patentblatt 82/40**

(84) Benannte Vertragsstaaten:
**FR GB NL**

(56) Entgegenhaltungen:
**DE-A-2 510 475**
**DE-A-2 636 610**

(73) Patentinhaber: **Licentia Patent-Verwaltungs-GmbH, Theodor-Stern-Kai 1, D-6000 Frankfurt/Main 70 (DE)**

(72) Erfinder: **RILLER, Peter, Uhlandweg 43, D-8504 Stein (DE)**
Erfinder: **TAMS, Wolfgang, Schönbornring 10, D-6078 Neu-Isenburg 2 (DE)**
Erfinder: **BREITENBACH, Otto, Raunheimer Strasse 24, D-6502 Kostheim (DE)**

(74) Vertreter: **Lertes, Kurt, Dr., Licentia Patent-Verwaltungs-GmbH Theodor-Stern-Kai 1, D-6000 Frankfurt/M 70 (DE)**

## Elektronische Vorrichtung zur Verwaltung von insbesondere im Haushalt eingelagerten verderblichen Gütern

### Technisches Gebiet

Die Erfindung bezieht sich auf eine elektronische Vorrichtung zur Verwaltung von — insbesondere im Haushalt eingelagerten — verderblichen Gütern mit gleicher und/oder unterschiedlicher Lagerzeit und mit zwischen Raumtemperatur und Gefriertemperatur liegenden Lagertemperaturen unter Verwendung eines Dateneingabe- und -ausgabesystems, wobei das Dateneingabesystem die Gutart, Gutartuntergruppe, Stückzahl und Gewicht in digitale Wörter umsetzt.

### Stand der Technik

Bei der Lagerung von verderblichen Gütern, die einerseits je nach Bevorratungszeitraum unterschiedliche Lagertemperaturen erfordern, andererseits je nach Lebensmittelart und Lagertemperatur unterschiedliche Qualitätsminderungen je Lagerungszeiteinheit erfahren, entstehen erhebliche Verwaltungsschwierigkeiten. Diese Schwierigkeiten lassen sich am Beispiel der Tiefkühllagerung im Haushaltsbereich erläutern:

Werden Lebensmittel bei Temperaturen gelagert, die niedriger als 12°C liegen, so läßt sich der sogenannte bakterielle Verderb praktisch unterbinden. Dagegen wird auch bei sehr tiefen Temperaturen der sogenannte sensorische Verderb, der wahrscheinlich durch langsam ablaufende chemische Prozesse entsteht, weiterhin anhalten. Dieser führt zwar nicht zur Entwicklung gesundheitsschädlicher Stoffe innerhalb der Lebensmittel, bewirkt jedoch eine ständig wachsende Wertminderung der Güter. Auch dieser Prozeß ist — wie derjenige des Bakterienwachstums — stark temperaturabhängig. Darüber hinaus läuft er in den verschiedenen Lebensmittelarten verschieden schnell ab, woraus sich die im internationalen Gefrierbuch angegebenen maximalen Lagerdauern für die verschiedenen Lebensmittelarten ergeben (Institut International Du Froid, Recommandations pour la préparation et la distribution des aliments congelés, 1972, Annexe au Bulletin de l'Institut International du Froid, 177, Boulevard Malesherbes, F-75 Paris 17e, S. 218 ff.). Diese Angaben unterstellen eine Lagerung bei Temperaturen, die ständig bei minus 18°C oder tiefer liegen. Aus diesen Angaben sind sogenannte Gefrierkalender entwickelt worden, die in den Innenräumen von Gefriergeräten angebracht sind und die in bildhafter oder verbaler Form für die zu größeren Gruppen zusammengefaßten verschiedenen Lebensmittelarten diejenigen maximalen Lagerzeiten angeben, die vom Benutzer des Gerätes nicht überschritten werden sollten. Die Schwierigkeit für den Benutzer eines solchen Gerätes besteht nun darin, daß er eine Übersicht behalten muß über einen Vorrat von Gütern, dessen Größe sich durch Ein- und Auslagerungen ständig ändert, und für dessen Bestandteile durch unterschiedliche Verfallzeiten der Güter selbst und durch verschiedene Einlagerungszeitpunkte die unterschiedlichsten Lagerendzeitpunkte gelten.

Für die Lösung dieses Problems werden von den Geräteherstellern und der Zubehörindustrie verschiedene Hilfsmittel angeboten, die alle das Prinzip der Aufschreibung bzw. der Karteikartentechnik und der visuellen Überwachung benutzen. Hierfür werden entweder Hilfsflächen an den Lagerkörben des Gerätes selbst oder Aufschreibflächen in Form von Bestandsführungslisten oder an der Geräteaußenwand anbringbaren Schreibtafeln bzw. Etiketten angeboten (HEA-Bilderdienst-actuell 20 30 01, Okt. 1974).

Sollen derartige Aufzeichnungen nicht nur der Überwachung der Lagerendzeitpunkte, sondern auch der Mindestbestandshaltung für verschiedene Lebensmittel bzw. der Einkaufsentscheidung bei Vorliegen günstiger Angebote für ausgewählte Lebensmittelsorten dienen, so müssen diese Aufschreibungen nach verschiedenen Kriterien geordnet vorgenommen werden. Das stellt jedoch außerordentlich hohe Zeitanforderungen für den Benutzer des Gefriergerätes dar.

### Aufgabe, Lösung

Aufgabe der vorliegenden Erfindung ist einerseits die Automatisierung der Überwachungsfunktion für die Lagerendzeitpunkte, wobei gleichzeitig der Einfluß der Lagertemperatur mit berücksichtigt werden soll, andererseits soll eine starke Vereinfachung der weiteren vorstehend genannten Verwaltungsfunktionen erreicht werden.

Diese Aufgabe wird erfindungsgemäß durch die im Kennzeichen des Anspruchs 1 angegebenen Maßnahmen gelöst.

Zweckmäßige Weiterbildungen sind den Unteransprüchen zu entnehmen.

### Vorteil

Der durch die Erfindung erzielte Vorteil besteht insbesondere darin, daß eine selbsttätige Überwachung der Verfalldaten aller eingelagerten Güter und eine ständige Übersicht des Lagerbestandes nach vorgegebenen Parametern erreicht ist.

### Darstellung der Erfindung

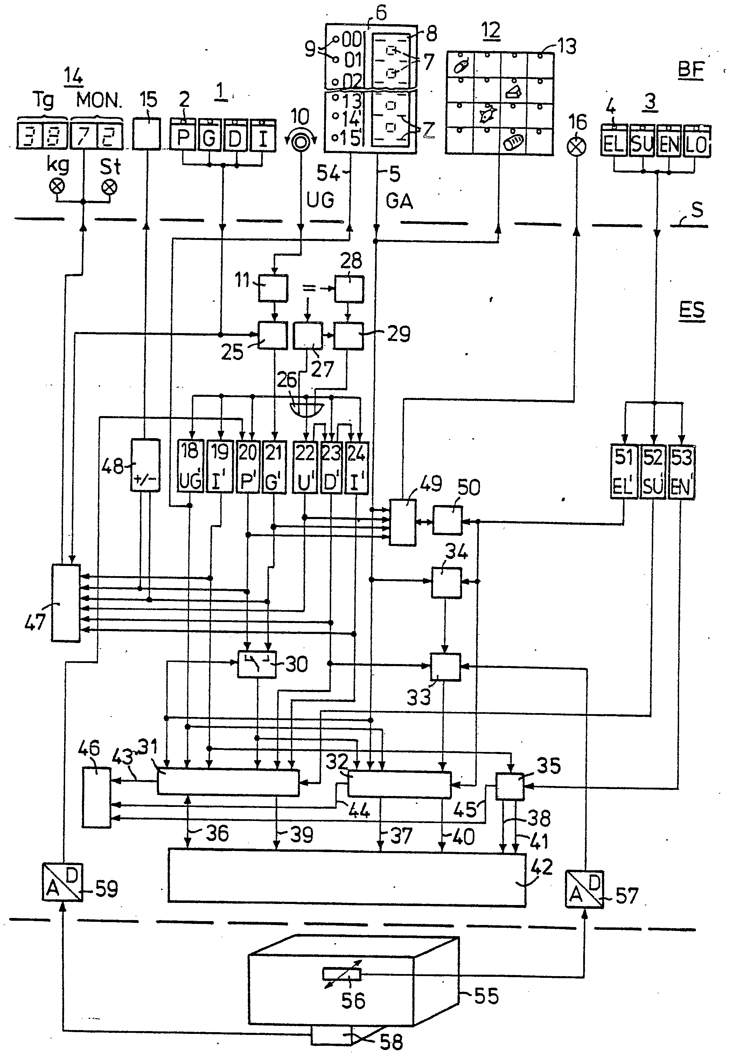

Die Erfindung wird nachstehend anhand eines in der Zeichnung schematisch dargestellten Ausführungsbeispieles näher erläutert.

Wie aus der Zeichnung ersichtlich, umfaßt die Vorrichtung ein Bedienungsfeld BF (Oberhalb der Strichelung S) und eine die über das Bedienungsfeld BF eingegebenen Gutdaten verarbeitende elektronische Schaltung ES (unterhalb der Strichelung S). Ferner ist schematisch eine Lagervorrichtung 55 für Güter dargestellt, die beispielsweise schrank- oder truhenartig ausgebildet ist, wie diese bereits als Haushalts-Gefriergeräte od. dgl. bekannt sind.

Das Bedienungsfeld BF umfaßt folgende Elemente:
eine Parameter-Tastatur 1 mit einer Taste P für die Eingabe von Stückzahlen, einer Taste G für die Eingabe des Gewichts, einer Taste D für die Eingabe des Datums und einer Taste I für die Eingabe von Identitätsnummern; jede Taste hat eine Leuchtdiode 2;
eine Betriebsarten-Tastatur 3 mit einer Taste EL für das Einlagern von Lagergut, einer Taste SU für das Suchen von Lagergut, einer Taste EN für das Entnehmen von Lagergut und einer Taste LO für das Löschen fehlerhafter Eingangsdaten; auch diese Tasten haben je eine Leuchtdiode 4;
eine elektronische, digitale Wörter über eine Leitung 5 ausgebende Abtasteinrichtung 6 mit elektronischen Abtastmitteln 7 für aufzulegende Karten 8, die zeilenweise beispielsweise bis zu sechzehn Untergruppen des jeweiligen Gutes in Klarschrift aufweisen, wobei die sechzehn als Strichelung angedeuteten Klarschriftzeilen Z mit Zahlen 00 bis 15' und zugeordneten Signallampen 9 (Leuchtdioden) der Abtasteinrichtung 6 korrespondieren;
ein Stellglied 10, beispielsweise in Form eines Drehknopfes, mit dem bei Drehung in Richtung des Doppelpfeiles von einer als Bitgenerator ausgebildeten Einrichtung 11 je nach Drehrichtung größer oder kleiner werdende Zahlenwerte ausgegeben werden;
eine beispielsweise sechzehn verschiedene Güter umfassende optische Anzeigetafel 12, die je Anzeigefeld eine Lampe 13 (Leuchtdiode) und ein für das jeweilige Gut typisches Symbol aufweist, wie beispielsweise durch die Lebensmittelarten Brot, Wurst, Fisch, Käse angedeutet ist. Die Anzeigetafel 12 ist auswechselbar, so daß ganz nach Bedarf des Benutzers spezielle Symboltafeln verwendbar sind;
eine 4stellige 7-Segment-Anzeige 14, die zur Ausgabe der aktuellen Uhrzeit in Stunden und Minuten, Tag und Monat, Gewicht und Stückzahl sowie Identitätsnummern in Verbindung mit Bezeichnungslampen kg, St dient;
eine Füllgradanzeige 15, die dem Benutzer anzeigt, in welchem Umfang der Lagerbehälter mit Gütern gefüllt ist;
eine Lampe 16, die den Ablauf von Einfrierzeiten anzeigt.

Die über das Bedienungsfeld BF angesteuerte Schaltung ES umfaßt eine Reihe von Binärzählern 18 bis 24, die über einen Multiplexer 25 entweder von den Signalen des manuell durch die Handhabe 10 betätigten Bitgenerators 11 oder von den Signalen der Tasten der Parameter-Tastatur 1 angesteuert werden; der Zähler 18 wird durch den Bitgenerator 11 angesteuert, wie durch UG' angedeutet, der Zähler 19 durch die Taste I, wie durch I' angedeutet, der Zähler 20 durch die Taste P, wie durch P' angedeutet, der Zähler 21 durch die Taste G, wie durch G' angedeutet. Der Zähler 22 erhält über eine ODER-Stufe 26 Sekundenimpulse von einem Uhrimpulsgenerator 27; es ist ferner ein Netzausfallsensor 28 und ein Netzausfallzähler 29 vorgesehen, der während einer Netzausfallzeit vom Generator 27 jede Minute einen Impuls erhält. Der Übertrag des Zählers 22 ist einem Datenzähler 23 zugeführt, dessen Übertrag an einen Jahreszähler 24 geführt ist.

Die Ausgangsleitung 5 der Karten-Abtastmittel 7 und die Ausgänge der Zähler 18, 19 und 23, 24 sind direkt und die Ausgänge der Zähler 20, 21 über einen elektronischen Schalter 30 an ein steuerbares Vergleichsglied 31 geführt; die Ausgänge 5 der Karten-Abtastmittel 7, der Zähler 18, 19 sowie der Ausgang des Schalters 30 sind an ein steuerbares Daten-Aufbereitungsglied 32 geschaltet, dem ferner über ein vom Datums-Zähler 23 gesteuertes Rechenwerk 33 die Daten eines Lagerzeitspeichers 34 zugeführt werden; der Ausgang des Identitätsnummern-Zählers 19 ist an einen steuerbaren Löschgenerator 35 geführt.

Das Vergleichsglied 31, das Aufbereitungsglied 32 und der Löschgenerator 35 sind über Datenleitungen 36, 37, 38 und Adressenleitungen 39, 40, 41 mit einem Schreib-Lese-Speicher 42 verbunden, der die über die Abtasteinrichtung 6, Parameter-Tastatur 1 und Handhabe 10 mit Bitgenerator 11 des Bedienungsfeldes BF eingegebenen und modifizierten Gutdaten aufnimmt.

Die Ausgänge 43, 44, 45 von Vergleichsglied 31, Datenaufbereitungsglied 32 und Löschgenerator 35 sind an einen Drucker 46 geführt.

Die Ausgänge der Zähler 19 bis 24 sind ferner an einen Multiplexer 47 geführt, der die Anzeige 14 ansteuert; der Multiplexer 47 wird von den Tasten der Tastatur 1 beeinflußt.

Zur Anzeige des Füllgrades des Stückgutlagers ist ein von den Ausgängen der Zähler 20, 21 angesteuertes Rechenwerk 48 vorgesehen, an welches die Füllgradanzeige 15 geschaltet ist.

Die Ausgänge 5 der Abtastmittel 7 und die Ausgänge der Zähler 20, 21, 22 sind an ein Steuer-Rechenwerk 49 geführt, welches mit einem adressierbaren Speicher 50 zusammenarbeitet, der beispielsweise für Einfrierzeiten vorgesehen ist; das Rechen-Steuerwerk 49 steuert die Lampe 16.

Wie vorstehend angedeutet, sind das Vergleichsglied 31, das Aufbereitungsglied 32 sowie der Löschgenerator 35 steuerbar und werden vom Benutzer mittels der Tasten EL, SU, EN, LO der Betriebsarten-Tastatur 3 unterschiedlich aktiviert, ob das Gut eingelagert, gesucht, entnommen oder irrtümliche Eingaben gelöscht werden sollen; den Tasten EL, SU, En der Tastatur 3 sind Kodiermatrizen 51 bis 53 zugeordnet; die Signale der Kodierstufe 51 aktivieren bei Betätigung der der Funktion Einlagern von Gut zugeordneten Taste EL das Daten-Aufbereitungsglied 32, den Lagerzeitspeicher 34 und den Speicher 50; die Signale der Kodierstufe 52 aktivieren bei Betätigung der der Funktion Suchen von Gut zugeordneten Taste SU das Daten-Vergleichsglied 31 und die Signale der Kodierstufe 53 aktivieren bei Betätigung der der Funktion Entnahme von Gut zugeordneten Taste EN den Löschgenerator 35; die der Funktion Löschen zugeordnete Taste LO dient zur Korrektur falsch eingegebener Gutdaten; bei Betätigung dieser Taste werden die vorher eingegebenen Gutdaten gelöscht.

Nachstehend wird der Vorgang des Einlagerns näher erläutert.

Vom Benutzer wird auf die Abtasteinrichtung 6 eine der einzulagernden Art des Gutes entsprechende Karte 8 aufgelegt. Es möge beispielsweise Obst sein; die Karte 8 hat eine dementsprechende Kodierung, die mittels der Abtastung 7 in ein digitales Wort umgesetzt wird, das über Leitung 5 an die Symboltafel 12 gelangt, so daß entsprechend der durch die aufgelegte Karte 8 festgelegten Gutart GA die entsprechende Lampe 13 eines Feldes, beispielsweise Fisch, aufleuchtet (1 aus 16-Anzeige).

Das am Ausgang 5 der Abtasteinrichtung 6 anstehende digitale Wort gelangt ferner an das Aufbereitungsglied 32.

Mittels des durch die Handhabe 10 betätigbaren Bitgenerators 11 wählt der Benutzer die in einer der Zeilen 00 bis 15' in Klarschrift aufgeführte Untergruppe UG des Gutes, beispielsweise Seezunge in Zeile 01, indem die Handhabe 10 so lange verstellt wird, bis die dieser Zeile zugeordnete Lampe 9 aufleuchtet; das damit anstehende digitale Wort des Bitgenerators 11 gelangt an den Zähler 18, dessen am Ausgang auftretende digitale Wörter über Leitung 54 an den den Zeilen 00 bis 15' zugeordneten Lampen 9 (1 aus 16-Anzeige) und am Aufbereitungsglied 32 auftreten, an welchem ferner das auf die Gutart bezogene digitale Wort der Abtastmittel 7 steht.

Liegen Stückzahlen vor, so wird die Taste P der Tastatur 1 betätigt, wodurch als Quittierung durch die elektronische Schaltung ES die der Taste P zugeordnete Diode 2 aufleuchtet, die Ziffernanzeige 14 auf Stückzahlanzeige geschaltet wird und die Lampe St aufleuchtet. Mittels der Handhabe 10 wird unter Beobachtung der Anzeige 14 der Bitgenerator 11 auf das der einzuspeichernden Stückzahl entsprechende digitale Wort gestellt, das am Ausgang des Zählers 20 auftritt und das über den Schalter 30 auch am Aufbereitungsglied 32 liegt.

Das digitale Wort der Abtastmittel 7 (Leitung 5) ist als Adresse an den Speicher 34 gelegt.

Wird nunmehr die Taste EL der Tastatur 3 betätigt, so werden der Speicher 34 und das Aufbereitungsglied 32 durch das von der Kodierstufe 51 ausgegebene digitale Wort aktiviert.

Der Speicher 34 gibt eine für Fisch festgelegte Lagerzeit an das als Addierwerk ausgebildete Rechenwerk 33 aus, welches das Verfalldatum errechnet, indem die vom Speicher 34 vorgegebene Lagerzeit zur über den mittels der Taste D aktivierten Zähler 23 ausgegebenen aktuellen Lagerzeit addiert wird; das Ergebnis gelangt mit den digitalen Wörtern der Abtastmittel 7, der Zähler 18 und 20 in das aktivierte Aufbereitungsglied 32, das für das Gut Identitätsnummern mit Hilfe eines nicht weiter dargestellten Adressenzählers generiert, der über Leitung 41 die Adressen des Speichers 42 hochzählt, wobei auf freie Speicherplätze geprüft und bei Auffindung eines freien Speicherplatzes die digitalen Wörter der Abtastmittel 7 und der Zähler 18, 20 über die Datenleitung 37 in diesem Speicherplatz abgelegt und eine Identitätsnummer erzeugt wird, welche am Ausgang 44 des Aufbereitungsgliedes 32 auftritt und vom Drucker 46 ausgedruckt wird. Sind mehrere Güter mit gleichen Daten zeitlich verschieden einzulagern, so sind diese Güter doch durch die jeweils zugeteilte Identitätsnummer unterschieden; die Taste EL wird lediglich entsprechend oft betätigt, und entsprechend wird vom Aufbereitungsglied 32 jeweils eine neue Identitätsnummer erzeugt; am Ausgang 44 des Aufbereitungsgliedes 32 treten ferner die Gutdaten und deren Verfalldatum auf, die ebenfalls vom Drucker 46 ausgedruckt werden.

Die Tastatur 1 ist derart ausgebildet, daß eine Einstellung bzw. Änderung der vom Zähler 22 ausgegebenen Uhrzeit U' und des vom Zähler 23 ausgegebenen Datums D' durch Betätigung der Tasten P und G, der Handhabe 10 und der Ziffernanzeige 14 erfolgt, während die Einstellung der Jahreszahl J' des Zählers 24 durch Betätigung der Tasten D und I erfolgt.

Für Güter, die einfrierbar sind, ist der Speicher 50 vorhanden, der Einfrierzeiten enthält und der beim Vorgang Einlesen durch Betätigen der Taste EL der Tastatur 3 aktiviert wird; dem Speicher 50 sind über das Rechen-Steuerwerk 49 das digitale Wort für die Gutart, die Stückzahl bzw. Gewicht und die Uhrzeit eingegeben; nach Ablauf der jeweiligen Einfrierzeit leuchtet die Lampe 16 auf oder das am Rechen-Steuerwerk 49 auftretende Signal wird zur Unterbrechung des Gefriervorganges herangezogen.

Liegt ein Gut vor, bei welchem das Gewicht maßgeblich ist, so läuft der Vorgang des Einlagerns wie vorstehend beschrieben ab, wobei lediglich anstelle der Taste P die Taste G der Tastatur 1 betätigt wird, wodurch die Lampe kg und das digitale Wort des Zählers 21 über den umgelegten Schalter 30 an das Aufbereitungsglied 32 gelangt.

Nachstehend wird der Vorgang des Suchens von eingelagerten Gütern näher erläutert.

Mit der Funktion Suchen kann sich der Benutzer über den Bestand der eingelagerten Güter informieren.

Zum Auffinden eines bestimmten Gutes werden der Vorrichtung ein oder mehrere Suchparameter eingegeben, wobei als Suchparameter jede Gutangabe einschließlich der Identitätsnummer dienen kann.

Nach Eingabe der Suchparameter über das Bedienungsfeld BF und Betätigen der Funktionstaste SU werden alle eingelagerten Güter, auf welche die Suchparameter zutreffen, mit allen gespeicherten Daten vom Drucker 46 ausgegeben.

Für einen Suchlauf kann die Identitätsnummer durch Betätigen der Taste I der Tastatur 1, die Handhabe 10 mit Bitgenerator 11 und Ziffernanzeige 14 vorgegeben werden.

Der Funktion Suchen ist das mit den Ausgängen der Abtastmittel 7, der Zähler 18 bis 21 und 23, 24 sowie über die Daten- und Adreßleitungen 36, 39 mit dem Programmspeicher 42 verbundene Vergleichsglied 31 zugeordnet, welches durch Betätigung der Taste SU über die Kodierstufe 52 aktiviert wird.

Das Vergleichsglied 31 enthält einen nicht weiter dargestellten Adressenzähler, mit dessen Hilfe über Leitung 39 die Adressen des Speichers 42 durchgelesen und der jeweilige Dateninhalt des abgefragten Speicherplatzes über die Datenleitung 36 an das Vergleichsglied 31 gelegt und mit den von den Abtastmitteln 7 und Zählerausgängen anstehenden Dateninformationen verglichen wird. Liegt Übereinstimmung vor, so wird diese Information über die Ausgangsleitung 43 des Vergleichsgliedes 31 an den Drucker 46 ausgegeben.

Gesucht werden kann nach den Güterarten GA (Abtastmittel 7), den jeweiligen Untergruppen UG (Zähler 18), der Identitätsnummer I (Zähler 19), Stückzahl P (Zähler 20), Gewicht G (Zähler 21), Datum D (Zähler 23), Jahr J (Zähler 24). Die Sucharten können kombiniert werden durch Betätigung verschiedener Tasten der Tastatur 1. Von der Anzeige 14 ist dabei das Verfalldatum, Gewicht und Identitätsnummer ablesbar.

Die Güterentnahme erfolgt in folgender Weise.

Wie beim Vorgang des Einlagerns können die Gutdaten wieder über das Bedienungsfeld BF vorgegeben werden, oder es wird wie beim Vorgang des Suchens lediglich die Identitätsnummer herangezogen.

Wird die Taste EN der Tastatur 3 betätigt, so wird über die Kodierstufe 53 der Löschgenerator 35 aktiviert; mittels eines im Löschgenerator enthaltenen, nicht weiter dargestellten Adressenzählers wird die durch den Ausgang des Zählers 19 vorgegebene Identitätsnummer über die Leitung 41 in den Speicher 42 gegeben und der Dateninhalt des entsprechenden Speicherplatzes über die Datenleitung 38 und Ausgang 45 des Löschgenerators 35 an den Drucker 46 gegeben und dann der Speicherplatzinhalt gelöscht.

Der Drucker 46 erzeugt Etiketten für die Güter mit den Gutdaten und der Identitätsnummer; die Etiketten können eine Klebefläche aufweisen und auf das Gut geklebt werden; der Drucker gibt ferner Störungsmeldungen aus, wie beispielsweise bei Netzausfall.

Wie vorstehend erläutert, wird mittels der im Speicher 34 abgelegten Lagerzeiten und des Rechenwerkes 33 das Verfalldatum des jeweilig eingelagerten Gutes nach Monat und Jahr errechnet und über das Datenaufbereitungsglied 32 mit den weiteren Gutdaten im Speicher 42 abgelegt.

Beispielsweise in der Mitte eines jeden Monats, also etwa 14 Tage vor einer eventuell abgelaufenen Lagerzeit, werden alle Verfalldaten aufgrund des durch den Kalenderuhr-Schaltkreis 23, 24 gegebenen Aktuellen Datums selbsttätig überprüft und die Güter, für die mit dem laufenden Monat die Lagerdauer beendet ist, mittels des Druckers 46 aufgelistet. Am Ende jeden Monats werden dann, wie vorstehend beschrieben, die Güter ermittelt, welche die vorgegebene Lagerdauer erreicht haben, was wieder über den Drucker 46 ausgegeben wird.

Wie vorstehend erwähnt, werden in der Betriebsart des Einlagerns von Gut entsprechende Verfalldaten in den Schreib-Lese-Speicher 42 eingeschrieben; da diese Verfalldaten unter Umständen von der an der Lagerstelle des Gutes herrschenden Temperatur abhängig sind, ist bei einer beispielsweise schrankförmig ausgebildeten Güterlagervorrichtung 55 ein Temperaturfühler 56 im Innenraum vorgesehen, welcher die Temperatur an dieser Lagerstelle des Gutes mißt; der Temperaturwert wird mittels eines Analog-Digital-Umsetzers 57 in ein digitales Wort umgesetzt, welches dem Rechenwerk 33 zugeführt ist, das nach Maßgabe der aktuellen Temperatur der Lagerstelle laufend die im Schreib-Lese-Speicher 42 stehenden Verfalldaten korrigiert.

Um selbsttätig das Gewicht der ein- oder auszulagernden Güter zu erfassen, ist unter der Lagervorrichtung 55 ein Kraftsensor 58 angeordnet; der Gewichtswert wird mittels eines Analog-Digital-Umsetzers 59 in ein digitales Wort umgesetzt, das bei der Betriebsart des Einlagerns von Gut beispielsweise über den Zähler 20 in den Schreib-Lese-Speicher 42 eingespeichert wird; bei der Betriebsart der Entnahme von Gut wird aus der mittels des Kraftsensors 58 erfaßten Gewichtsabnahme ein Signal zur Vornahme der erforderlichen Löschung der entsprechenden, im Schreib-Lese-Speicher 42 stehenden Daten durch den Benutzer abgeleitet.

Um die gespeicherten Informationen auch bei Spannungsausfall zu erhalten, ist eine Pufferung der Versorgungsspannung vorgesehen. Bei Netzausfall spricht der Sensor 28 an, und der Uhrimpulsgenerator 27 sowie der Netzausfall-Zähler 29 werden aus einer nicht weiter dargestellten Batterie betrieben. Der Zähler 29 erhält die Impulse des Generators 27 und zählt aufwärts (Minuten); kehrt die Netzversorgungsspannung wieder, wird der Stand des Zählers 29 über die ODER-Stufe 26 zu der bei Netzausfall herrrschenden Zeit addiert, so daß der Zähler 22 die aktuelle Zeit hat.

**Patentansprüche**

1. Elektronische Vorrichtung zur Verwaltung von — insbesondere im Haushalt eingelagerten — verderblichen Gütern mit gleicher und/oder unterschiedlicher Lagerzeit und mit zwischen Raumtemperatur und Gefriertemperatur liegenden Lagertemperaturen unter Verwendung eines Dateneingabe- und -ausgabesystems, wobei das Dateneingabesystem die Gutart, Gutartuntergruppe, Stückzahl und Gewicht in digitale Wörter umsetzt, dadurch gekennzeichnet, daß ein von außen zu betätigender Betriebsarten-Schaltkreis (3, 51, 52, 53) vorgesehen ist, durch den in der Betriebsart des Einlagerns von Gut die digitalen Wörter mit einem aus der Gutart und der aktuellen Zeit abgeleiteten, ein Verfalldatum kennzeichnenden digitalen Wort in einen Schreib-Lese-Speicher (42) und einen Drucker (46) gelangen, daß in der Betriebsart des Suchens von Gut durch den Betriebsarten-Schaltkreis die vom Dateneingabesystem umgesetzten digitalen Wörter mit den digitalen Wörtern des Schreib-Lese-Speichers (42) verglichen (31) und bei Gleichheit ausgedruckt werden, daß in der Betriebsart des Lagerns von Gütern die im Schreib-Lese-Speicher (42) eingeschriebenen Verfalldaten ständig nach Maßgabe der an der Güterlagerstelle (55) gemessenen, in ein digitales Wort umgesetzten aktuellen Temperatur korrigiert und alle im Schreib-Lese-Speicher eingespeicherten Verfalldaten ständig mit der aktuellen Zeit verglichen werden und bei Gleichheit das gefundene Lagergut mit der abgelaufenen Lagerzeit ausgedruckt wird, und daß in der Betriebsart des Entnehmens von Gut durch den Betriebsarten-Schaltkreis die für die Entnahme vorgegebenen digitalen Wörter ausgedruckt und der Inhalt der entsprechenden Speicherplätze des Schreib-Lese-Speichers (42) gelöscht wird.

2. Vorrichtung nach Anspruch 1, dadurch gekennzeichnet, daß für einzufrierende Güter ein Speicher (50) vorgesehen ist, in den gewichtsnormierte und gefriergutbezogene Einfrierzeiten eingeschrieben sind, und daß aus diesen Einfrierzeiten, dem in das Dateneingabesystem eingegebenen Gewicht (P′) oder Stückzahl (G′) des einzufrierenden Gutes und der aktuellen Zeit (U′) mittels eines Rechenwerkes (49) der Endzeitpunkt des Einfriervorganges bestimmt wird.

3. Vorrichtung nach Anspruch 1, dadurch gekennzeichnet, daß das Gewicht der ein- oder auszulagernden Güter mittels eines der Güter-Lagervorrichtung (55) zugeordneten Kraftsensors (56) erfaßt und während der Betriebsart des Einlagerns von Gut als digitales Wort in den Schreib-Lese-Speicher (42) eingespeichert wird und daß während der Betriebsart des Entnehmens von Gut aus der Gewichtsabnahme ein Signal zur Einleitung der Lösung der dem entnommenen Gut entsprechenden Daten im Schreib-Lese-Speicher (42) erzeugt ist.

4. Vorrichtung nach Anspruch 1 bis 3, dadurch gekennzeichnet, daß in der Betriebsart des Einlagerns von Gut ein eine Identitätsnummer darstellendes digitales Wort mit den anderen digitalen Wörtern in den Schreib-Lese-Speicher (42) eingeschrieben und ausgedruckt wird und daß in der Betriebsart des Suchens von Gut mittels des Dateneingabesystems (I, 10) den Identitätsnummern entsprechende digitale Wörter (I′) erzeugt werden, die zum Suchlauf der entsprechenden, im Schreib-Lese-Speicher (42) befindlichen digitalen Wörter herangezogen sind.

5. Vorrichtung nach Anspruch 1 bis 4, dadurch gekennzeichnet, daß für die Bildung des dem Verfalldatum zugeordneten digitalen Wortes ein adressierbarer Speicher (34) vorgesehen ist, in dem Lagerzeiten der Güter gespeichert sind, und daß dem Speicher ein Rechenwerk (33) nachgeschaltet ist, das zur als digitales Wort ausgegebenen Lagerzeit die von einem Kalenderuhr-Schaltkreis (22, 23, 24) ausgegebene aktuelle Lagerzeit als digitales Wort addiert.

6. Vorrichtung nach Anspruch 1 bis 5, dadurch gekennzeichnet, daß im Dateneingabesystem zur Umsetzung der Gutart eine Karten-Abtasteinrichtung (6) vorgesehen ist, daß die Karten (8) auf die Gutart bezogene Kennungen (7) und auf die Gutartuntergruppen bezogene Zeilen in Klarschrift aufweisen, daß den Zeilen Indikatoren (9) zugeordnet sind und daß die Auwahl der Untergruppenzeilen mittels eines durch eine Handhabe (10) betätigbaren und die Indikatoren (9) beeinflussenden Bitgenerators (11) erfolgt, der auch zur Bildung der den Gutartenuntergruppen (GU), den Identitätsnummern, den Stückzahlen zugeordneten digitalen Wörtern (UG′, I′, P′, G′) herangezogen ist.

7. Vorrichtung nach Anspruch 1 bis 6, dadurch gekennzeichnet, daß das Dateneingabesystem (BF) eine Parameter-Tastatur (1) aufweist, über die in Verbindung mit dem Bitgenerator ein oder mehrere Gut-Parameter (P, G, D, I, UG) vorgebbar sind.

8. Vorrichtung nach Anspruch 1 bis 7, dadurch gekennzeichnet, daß das Dateneingabesystem (BF) eine Betriebsarten-Tastatur (3) aufweist, über welche der Betriebsarten-Schaltkreis (50 bis 52) selektiv aktiviert wird.

9. Vorrichtung nach Anspruch 1 bis 8, dadurch gekennzeichnet, daß eine Ziffern- und Leuchtlampen-Anzeige (14, kg, St) vorgesehen ist, die von den vorgegebenen digitalen Wörtern der Identitätsnummern (I′), Stückzahl (P′), Gewicht (G′) und Kalenderuhr (U′, D′, I′) über eine steuerbare, von der Parameter-Tastatur (1) beeinflußte Matrix (47) angesteuert ist.

10. Vorrichtung nach Anspruch 1 bis 9, dadurch gekennzeichnet, daß ein Lager-Füllgradanzeiger vorgesehen ist, der aus einem Rechenwerk (48) besteht, dem die der Stückzahl und dem Gewicht zugeordneten digitalen Wörter (P′, G′) zugeführt sind und das einen Indikator (15) ansteuert.

## Claims

1. An electronic device for administering perishable goods — more particularly household perishable goods — with the same and/or a different storage period and with storage temperatures between room temperature and freezing using a data input/output system in which the data input system converts the type of goods, the specific type sub-group, the quantity and the weight into digital words, characterised in that an externally actuable function selector switch circuit (3, 51, 52, 53) is provided by means of which, in the mode of operation for storing goods, the digital words with a digital word derived from the type of goods and the instantaneous time and identifying a deterioration date are supplied to a read/write memory (42) and a printer (46); that in the mode of operation for searching for goods, by virtue of the function selector switch circuit the digital words converted by the data input system are compared (31) with the digital words from the read/write memory (42) and if they agree are printed out; that in the mode of operation for storing goods the deterioration dates entered in the read/write memory (42) are corrected continuously according to the instantaneous temperature measured at storage point (55), said temperature having being converted into a digital word, and all of the deterioration dates recorded in the read/write memory are compared continuously with the instantaneous time and if there is agreement details of any goods found in storage are printed out together with the expired storage date; and that in the mode of operation for removing goods by virtue of the function selector switch circuit the predetermined digital words for removal are printed out and the content of the corresponding memory locations in the read/write memory (42) are erased.

2. A device according to claim 1 characterised in that a memory (50) is provided for goods which are to be frozen and freezing periods are entered into the said memory in accordance with average weight and in relation to the goods to be frozen; and that a final time limit is ascertained using an arithmetic unit (49) from the freezing periods, from the weight (P') or quantity (G') of the goods to be frozen which has been entered in the data input system, and from the instantaneous time (U').

3. A device according to claim 1 characterised in that the weight of the goods to be put into or taken out of storage is detected by means of a force sensor (56) associated with the goods storage device (55) and, during the mode of operation for storing goods is recorded in the read/write memory (42) and that, during the mode of operation for removing goods, a signal which initiates cancellation of the data which corresponds to the goods which have been removed is generated in the read/write memory (42) from the reduction in weight.

4. A device according to claims 1 to 3 characterised in that in the mode of operation of storing goods a digital word which represents an identification number is entered with the other digital words in the read/write memory (42) and printed out; and that in the mode of operation for searching for goods digital words (I') corresponding to the identification numbers are generated by means of the date input system (I, 10) and used to run a search for the corresponding digital words located in the read/write memory (42).

5. A device according to claim 1 to 4 characterised in that an addressable memory (34) is provided in order to form the digital word associated with the deterioration data and storage times for the goods are recorded in this memory; and that an arithmetic unit (33) is connected after the memory, said arithmetic unit adding the instantaneous storage time given by a calendar clock circuit (22, 23, 24) in the form of a digital word to the existing storage time provided in the form of a digital word.

6. A device according to claim 1 to 5 characterised in that a card scanning device (6) is provided in the data input system for the purpose of resetting the type of goods; that the cards (8) have codes (7) which relate to the type of goods and lines of text in clear which relate to the type sub-groups; that indicators (9) are associated with the lines; and that the sub-group lines are selected by means of a bit generator (11) which can be actuated by a handle (10) and which influences the indicator (9), said bit generator being used to form the digital words (UG', I', P', G') associated with the goods type sub-group (GU), the identification numbers and the quantity.

7. A device according to claim 1 to 6 characterised in that the data input system (BF) has a parameter keyboard (1) which can be used to predetermine one or more goods parameters (P, G, D, I, UG) in conjunction with the bit generator.

8. A device according to claim 1 to 7 characterised in that the data input system (BF) has a vunction selector keyboard (3) which selectively activates the function selector switch circuit (50 to 52).

9. A device according to claim 1 to 8 characterised in that a digital an light emitting display (14, kg, St) is provided which is controlled by the predetermined digital words for the identification numbers (I'), quantity (P'), weight (G') and calendar clock (U', D', I') via a controllable matrix (47) which is influenced by the parameter keyboard (1).

10. A device according to claim 1 to 9 characterised in that a fullness indicator for the storage arrangement is provided and comprises an arithmetic unit (48) to which the digital words (P', G') associated with the quantity and weight are supplied, said arithmetic unit (48) controlling an indicator (15).

## Revendications

1. Installation électronique destinée en particulier à la gestion dans un ménage de marchandises ou produits périssables à temps de stockage égal ou différent et à température de stockage comprise entre la température ambiante et la température de congélation, avec un système d'entrée et de sortie de données, le système d'entrée convertissant le type de produits, le sous-groupe de types, la quantité et le poids en mots numériques, ladite installation étant caractérisée en ce qu'un circuit de mode de fonctionnement (3, 51, 52, 53), actionné de l'extérieur, transmet en mode d'entrée du produit les mots numériques et un mot numérique dérivé du type de produit et de l'heure effective, caractérisant une date limite de conservation, à une mémoire d'écriture lecture (42) et à une imprimante (46); en mode recherche d'un produit, les mots numériques convertis par le système d'entrée de données sont comparés par le circuit de mode aux mots numériques de la mémoire d'écriture-lecture (42), puis imprimés en cas d'égalité; en mode stockage de produits, les dates limites de conservation rangées dans la mémoire d'écriture-lecture (42) sont continûment corrigées en fonction d'une température effective, mesurée au point de stockage du produit (55) et convertie en un mot numérique, comparées à l'heure effective et, en cas d'égalité, le produit trouvé est imprimé avec la durée de stockage écoulée; et en mode sortie du produit, le circuit de mode imprime les mots numériques prédéterminés pour la sortie et efface le contenu des cellules correspondantes de la mémoire d'écriture-lecture (42).

2. Installation selon revendication 1, caractérisée en ce qu'une mémoire (50) est prévue pour les produits à congeler, dans laquelle sont enregistrées les durées de congélation par unité de poids du produit considéré; et une unité de calcul (49) détermine l'heure de fin de congélation à partier de ces durées de congélation, du poids (P') ou de la quantité (G') du produit à congeler, introduit dans le système d'entrée de données, et de l'heure effective (U').

3. Installation selon revendication 1, caractérisée en ce que le poids des produits à entrer ou à sortier est déterminé par un peson (56) affecté au dispositif de stockage (55) puis, en mode d'entrée de produit, enregistré dans la mémoire d'écriture-lecture (42) sous forme d'un mot numérique; et en mode de sortie de produit, un signal est dérivé de la perte de poids pour déclencher l'effacement dans la mémoire d'écriture-lecture (42) des données relatives au produit sortie.

4. Installation selon revendications 1 à 3, caractérisée en ce qu'en mode d'entréd de produit, un mot numérique représentant un numéro d'identification est enregistré dans la mémoire d'écriture-lecture (42) et imprimé avec les autres mots numériques; et en mode recherche de produit, le système d'entrée de données (I, 10) génère des mots numériques (I') utilisés pour la recherche des mots numériques correspondants dans la mémoire d'écriture-lecture (42).

5. Installation selon revendications 1 à 4, caractérisée en ce qu'une mémoire adressable (34), contenant les durées de stockage des produits, est prévue pour générer le mot numérique affecté à la date limite de conservation; et une unité de calcul (33), branchée en aval de ladite mémoire (34), additionne à la durée de stockage, délivrée sous forme d'un mot numérique, la durée de stockage effective, délivrée par un circuit horodatue (22, 23, 24).

6. Installation selon revendications 1 à 5, caractérisée en ce que le système d'entrée de données comprend un lecteur (6) de cartes pour la conversion du type de produits; les cartes (8) comportent des repères (7) pour les types de produits et des lignes de texte en clair pour les sous-groupes de types de produits; des indicateurs (9) sont affectés aux lignes; et la sélection des lignes de sous-groupe s'effectue à l'aide d'un générateur de bits (11), actionné au moyen d'un bouton (10), agissant sur les indicateurs (9) et servant aussi à la génération des mots numériques (UG', I', P', G') affectés aux sous-groupes de types de produits (GU), aux numéros d'identification et aux quantités.

7. Installation selon revendications 1 à 6, caractérisée en ce que le système d'entrée de données (BF) comprend un clavier de paramètres (1) qui, en liaison avec le générateur de bits, permet de prédéterminer un ou plusieurs paramètres du produit (P, G, D, I, UG).

8. Installation selon revendications 1 à 7, caractérisée en ce que le système d'entrée de données (BF) comprend un clavier de mode (3), qui active sélectivement le circuit de mode (50 à 52).

9. Installation selon revendications 1 à 8, caractérisée en ce que les mots numériques prédéterminés des numéros d'identification (I'), de la quantité (P'), du poids (G') et de l'horodateur (U', D', I') attaquent un afficheur à chiffres et lampes (14, kg, St) par l'intermédiaire d'une matrice commandée (47), influencée par le clavier de paramètres (1).

10. Installation selon revendications 1 à 9, caractétisée en ce qu'un indicateur de remplissage du compartiment est constitué par une unité de calcul (48) à laquelle sont transmis les mots numériques (P', G') affectés à la quantité et au poids, et qui commande un afficheur (15).

0 020 552